# EUROPEAN PATENT SPECIFICATION

(11) **EP 1 070 857 B1**
(45) Date of publication and mention of the grant of the patent: **05.04.2006**
(21) Application number: 00306262.7
(22) Date of filing: 24.07.2000
(51) Int. Cl.: F16B 5/00

(54) **Edge joint**
Kantenverbindung
Joint d'arête

(30) Priority: 23.07.1999 GB 9917446
(43) Date of publication of application: 24.01.2001
(73) Proprietor: Flude, Rodger Ellis, Acomb, York YO26 5BY (GB)
(72) Inventor: Flude, Rodger Ellis, Acomb, York YO26 5BY (GB)
(74) Representative: Gibbs, Christopher Stephen

(56) References cited:
- EP-A- 0 886 072
- DE-A- 3 724 648
- GB-A- 833 072
- GB-A- 2 310 396

## Description

Various means of joining panels, plates or sheets at an edge are known. They can be welded together along the edge or glued or joined with fasteners using an overlapping plate. If fasteners such as rivets or bolts are used they will of course protrude to both sides of the plate, and in some circumstances this is undesirable. The invention provides a way of joining two plates or panels along an edge, in particular in such a way that the surface is smooth on one side of the plate.

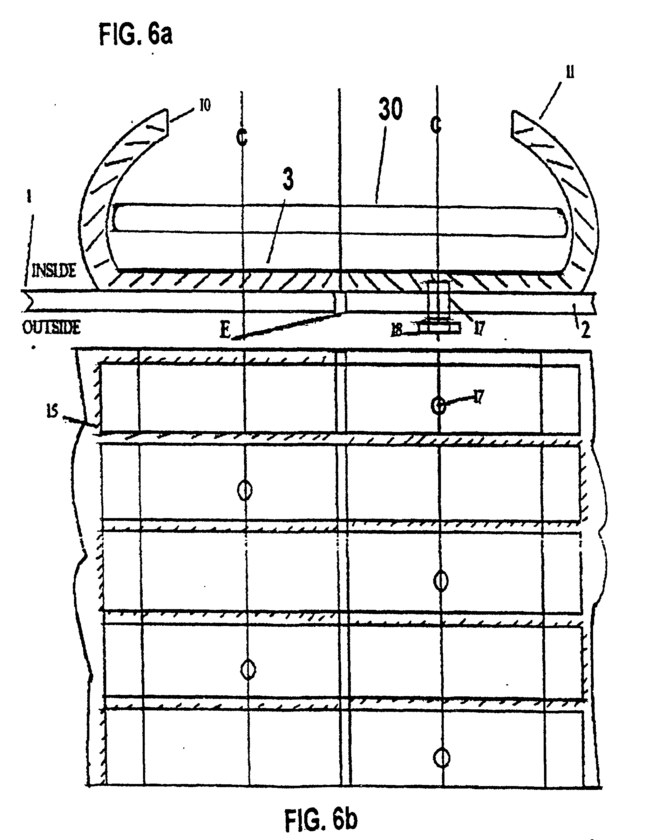

Joining panels along an edge by means of a hinge-like arrangement is known, for instance, from US 4407534 (Günter Petz). Here two panels are each given interleaved castellation-like upstanding lugs made by forming and bending the panel. The lugs are shaped so as to form a channel running parallel to the abutting edges, along which a pin-like connecting member can be inserted, holding the two panels together. This arrangement is not designed for strength and would not hold the panels together very effectively against a bending moment, for instance, around the axis of the channel. [For the avoidance of doubt it is mentioned that the hatching in Figs. 4-6 of this US document appears to be incorrect.]

GB 833072 (Stal Company) shows interlocking projections for joining annular engine members. The joint is intended to be a hinge to accommodate movement and the surface is not intended to be made smooth, and indeed cannot be except by using additional parts.

One aspect of the invention is defined in claim 1. Embodiments use two interleaved series of brackets on adjacent panel edges to be joined, the brackets having upstanding flanges. Preferably the joint is then made by inserting a rigid bar or setting substance between the upstanding flanges of the free ends.

A feature of the invention is that the brackets extend beyond the edge of each panel, so as to lie on top of the other panel. This contributes to the rigidity of the joint and also ensures that the two panels are held accurately in the same plane. This construction produces a strong joint relying on the shear strength of the bracket and on the compressive strength of the material in the space formed between the end flanges of the brackets. If a bar is used it should of course be of a width which matches the internal distance between the flanges on the one set of brackets to the flanges of the other set. The bar should be made a tight fit thus holding the edges of the panel, now lying underneath the interleaved series of brackets, tightly together.

If a setting material, such as concrete, is used then clearly the two edges have to be held together until the concrete is set; to this end a holding means can be provided which can be in the form of a suitable number of bolts and corresponding threaded holes in the plates and brackets, for instance, or, in the case of the plates being curved round to form a cylindrical structure, a taut band around the cylinder. It is possible to use both a solid, bar-type, spacer and an initially liquid material such as concrete or grout (mortar) at the same time.

The two plates can form part of a cylinder, the joint extending in the axial direction of the cylinder, or of course can simply be the two ends of a single plate bent round to form a cylinder; this would be appropriate for joints in thinner, more flexible material. Such a cylinder can then constitute either a free-standing structure or, preferably, a covering or cladding around a structure to be reinforced. For instance, the invention can be used for repairing masts, poles and like structures, lamp posts in particular, by placing a cylinder made of two half-cylindrical plates round the structure at the point where it is to be reinforced, the plates having previously been provided with reinforcing brackets as described above, fastening the two edges together using a bar, or holding the cylinder in the closed position temporarily, and filling the annular gap between the mast and the cylinder with concrete or other setting material and leaving it to set.

The invention is therefore also directed to a method of joining two panel edges, including the steps of providing each edge with a set of brackets protruding beyond the edge, each bracket having an upstanding flange on the protruding end, generally parallel to the edge and facing away from the plane of the panel; causing the two edges to abut in such a way that the brackets are interleaved and their protruding ends respectively overlap and lie on the other panel; and retaining the brackets in place by inserting a solid or setting material or bar between the respective sets of flanges.

The invention can be used to join two edges together where welding is not practicable, for instance when working with galvanised steel or underwater or in difficult vertical positions. The use of a bar gives a particularly strong joint but is of course only suitable where access from at least one end to the inside of the joint is possible.

The brackets can be simply protruding and bent-over parts of the edge of the plate, giving the latter a battlement-like outline; however, this tends not to give a good straight base to the recesses, and hence to detract from a good abutment of the edges. Moreover one does not obtain the automatic alignment of the plates that is afforded by welded brackets. Also it would be difficult to seal between the protruding brackets at their sides, but if a seal is not required then this embodiment could prove useful.

Instead, each bracket is preferably a separately fitted piece of identical construction to the others in a plane adjacent to the panel (if the panel is curved the word "plane" is to be construed accordingly). For fastening plates, say, 5-10 mm thick each bracket can be a more or less flat bar approximately 4 to 6 centimetres wide in a typical application and 5 to 10 centimetres long with flanges at both ends for simplicity of construction. Having a flange at both ends rather than only the protruding end also has the advantage that when a spacer bar is used to hold the gap shut the "redundant" flange helps guide the bar through the channel formed by the two rows of flanges. However, other embodiments have a flange only at the business end of the bar body. The flange may be angled or curved gradually out of the plane of the panel/bar body. If a rigid spacer bar is used the brackets should have the same thickness as the plates; if the "concrete" technique is used then the brackets should be thicker than the plate.

For a better understanding of the invention embodiments of it will now be described, by way of example, with reference to the accompanying drawings, in which:
Figures 1a and 1b show a detail of a joint embodying the invention;
Figures 2a and 2b show the joint being assembled;
Figure 3 shows a sectional view of a cylinder made of two plates joined using an embodiment of the invention;
Figure 4 shows a bar suitable for use in the joints in Figure 3;
Figure 5 shows a further embodiment of the invention;
Figures 6a and 6b show a variant of the embodiment of Figure 1;
Figures 7a and 7b show the joint of Figure 6 being assembled;
Figure 8 shows a cylinder using the invention; and
Figure 9 shows the bar in place.

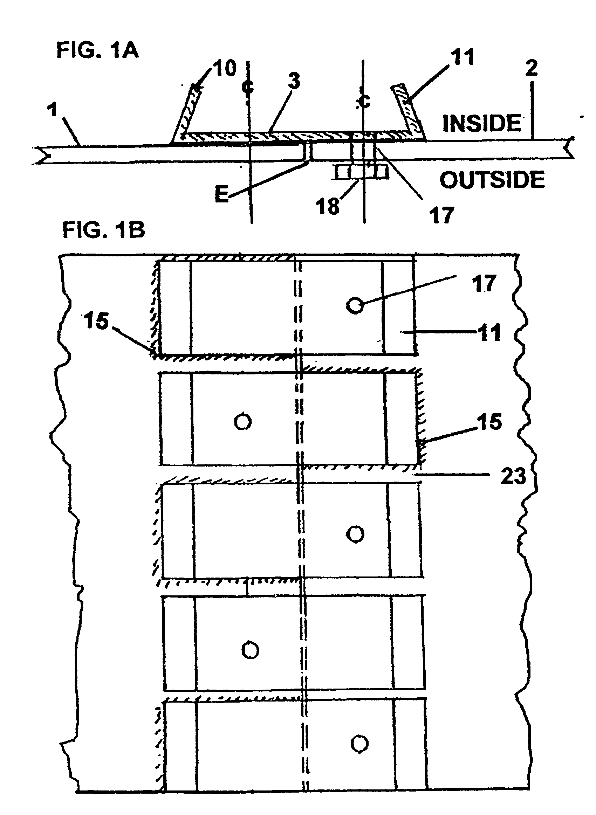

**Figure 1a** shows a sectional view and **Figure 1b** shows a plan view on the inside (i.e. the non-smooth side) of a joint made in accordance with the invention. Two plates or panels 1 and 2 abut along one edge E, so as to form a more-or-less continuous face on one side. On the other face of the two plates there is arranged a series - perhaps 5-10 pairs - of brackets 3 of generally rectangular shape, half overlapping the plate and half protruding beyond the edge E. In this embodiment both plates and brackets are made of steel and the brackets are welded 15 to the respective plate in the area of overlap. Each bracket is 45mm wide, 75mm long and 5-10mm thick, depending on the thickness of the plate.

As can be seen from Figure 1b, each pair of brackets along the edge of one plate is arranged in such a way as to leave room for a bracket from the other plate to lie between the pair, with a clearance of about 10-20mm between brackets, largely dictated by the welds. When the two edges are pushed together the brackets are therefore interleaved with adjacent brackets fastened to opposite plates.

Figure 1*a shows that each bracket 3 has at each end an upstanding flange or lug 10, 11 which in this embodiment is itself flat and angled back so as to be slightly re-entrant. When the two edges are pushed together the brackets lie flush on the other panel and the flanges form a channel along the direction of the edge E. Figure 1 also shows how the weld 15 runs all the way round the edge of that part of the bracket body that lies over its panel, resulting in a very strong joint.

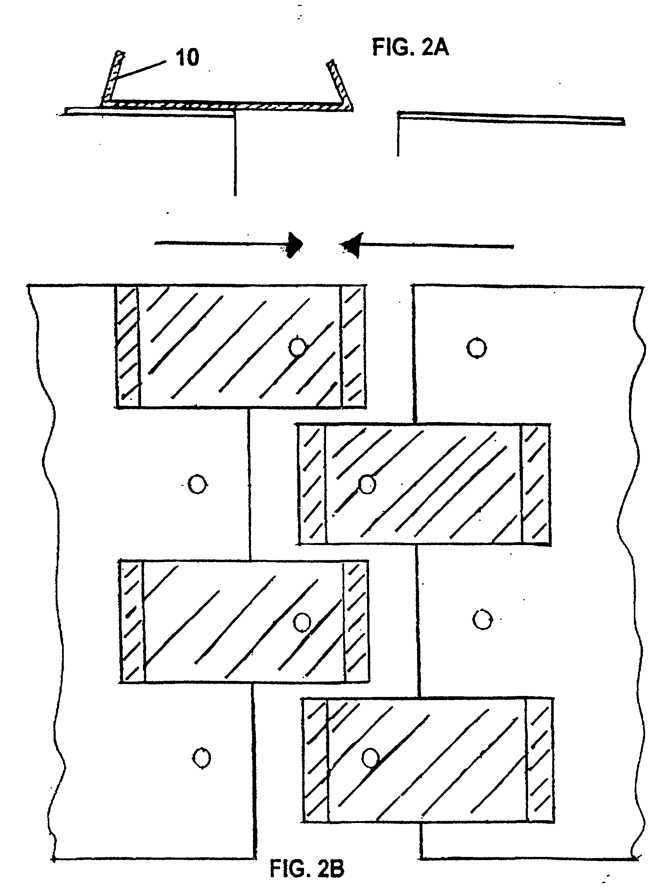

**Figures 2a and 2b** show the two edges being pushed together with the brackets each passing into the gap between the pair of brackets on the opposite plate. It can also be seen that there is a temporary holding device comprising holes 17 near the edges of the plates, arranged so that they lie underneath the free end of the corresponding bracket from the other plate when the edges are pushed together. There is a corresponding hole in the free end of the bracket. These holes are threaded for respective bolts 18. Alternatively a band or strap can be used.

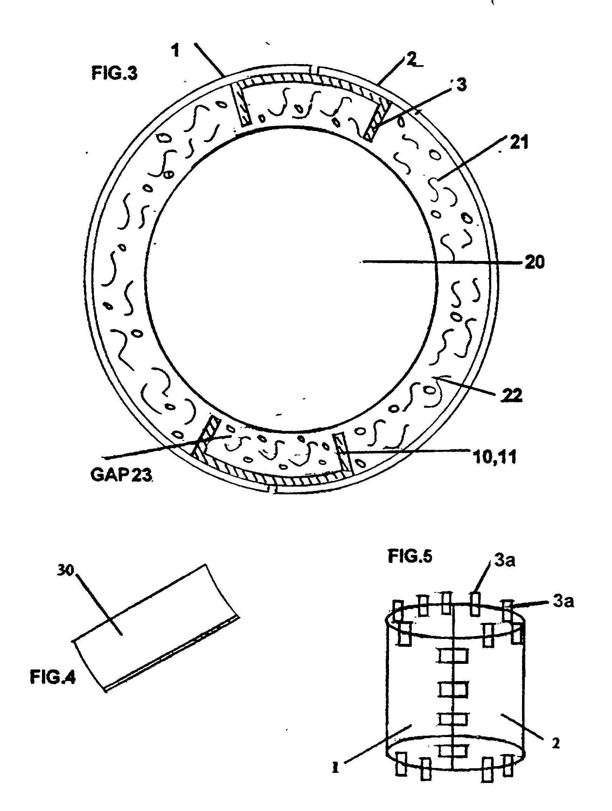

Once the two edges are pushed together the joint must be fixed in some suitable way. This can be done by using fasteners such as the bolts 18, but in preferred embodiments such fasteners are only temporary and are removed when the fixing means proper is in place. As shown in Figure 3 using the example of a cylinder the fixing is done simply by filling the space around the brackets with a setting material such as concrete. Figure 3 shows how the invention can be used to reinforce a cylindrical object such as a mast 20. The two plates 1 and 2 are wrapped around the mast leaving a clearance of perhaps a few centimetres (i.e. about 10% of the diameter). The plates can be held in position by temporary means while concrete 22 is injected into the gap 21, though the flanges 10, 11 can themselves act as spacers in this regard. It should be ensured that the gaps 23 between the flanges are wide enough to allow the concrete grout to be injected, or alternatively the flanges can have cutouts to ease the passage of the grout. Reinforcing rods can be laid along or passed through the gap region. The assembly is preferably vibrated to ensure that the grout penetrates thoroughly. Once the concrete is set the two sets of flanges or lugs 10 and 11 are then held in place and the structure is firm.

The structure shown in Figure 3 is suitable for mending lampposts, for instance, that have corroded at some point along their length, usually near ground level. The panels for a cladding match the cross-section of the post. Clearly if the post had some other section the panels could be made to match. The brackets are also shown with a matching curvature, but this is not strictly necessary. They could instead be made from a basically flat sheet, bent or cranked somewhat near the middle, in the vicinity of the joint, so that they more or less fit the curved interior wall of the panel and can be welded to it at least at their ends and at the bend.

For added strength, or if the edges of the plates are to be held together under pressure, thus forming a water-tight seal, a bar can be driven along the channel formed by the flanges 10 and 11. A suitable bar is shown in **Figure 4.** In this case the bar 30 has a curvature matching that of the plates when in position forming a cylinder. Before the bar is driven in the gap between the edges can be filled with a soft rubber or mastic material so that when the bar is driven along the channel this material is squashed, sealing the gap completely. For instance, a T-section rubber strip can be used, the stem of the T being inserted between the two plates. The bar is preferably slightly wider than the channel, for a really firm fit.

It is possible to fit the brackets in accordance with the invention along more than one edge of a plate. **Figure 5** shows an embodiment of the invention using such a technique. Here two plates 1 and 2 are joined as before along their vertical edges to form a cylinder. Each plate has further brackets 3a along what are now the curved cylindrical edges which can be used to join to a second cylinder formed in a similar manner, the brackets 3a interleaving in the same manner as along the axial edges. In this way a continuous tube can be built up which can be waterproofed as described above. The grout can be pumped in from the bottom to expel water as the gap fills. Such an embodiment can be useful for forming tubes in difficult situations such as on board ships for the oil industry.

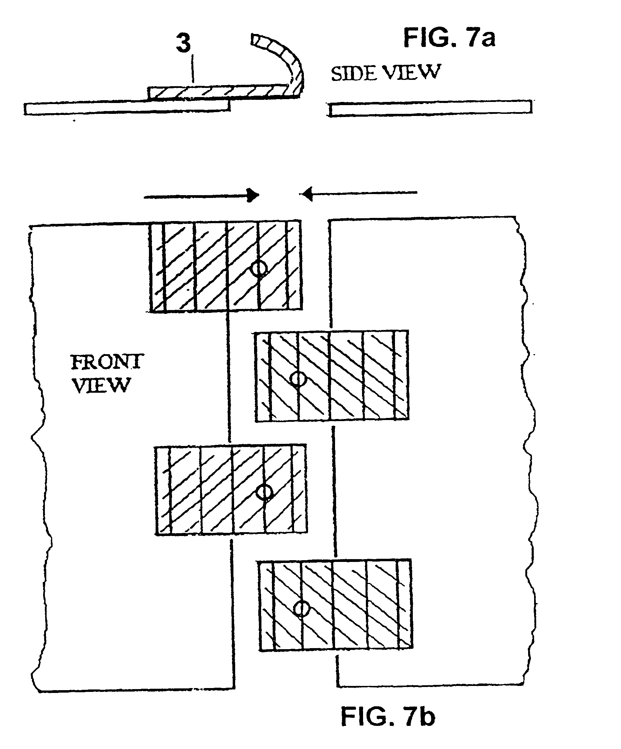

**Figure 6** shows an embodiment similar to that of Figure 1 but where the bent-over flange ends 10 and 11 are rounded rather than flat; this can be easier to manufacture. The figure also shows the bar 30 in place, retained by the overhanging ends of the flange ends. **Figure 7** shows the assembly of the joint, as in Figure 2.

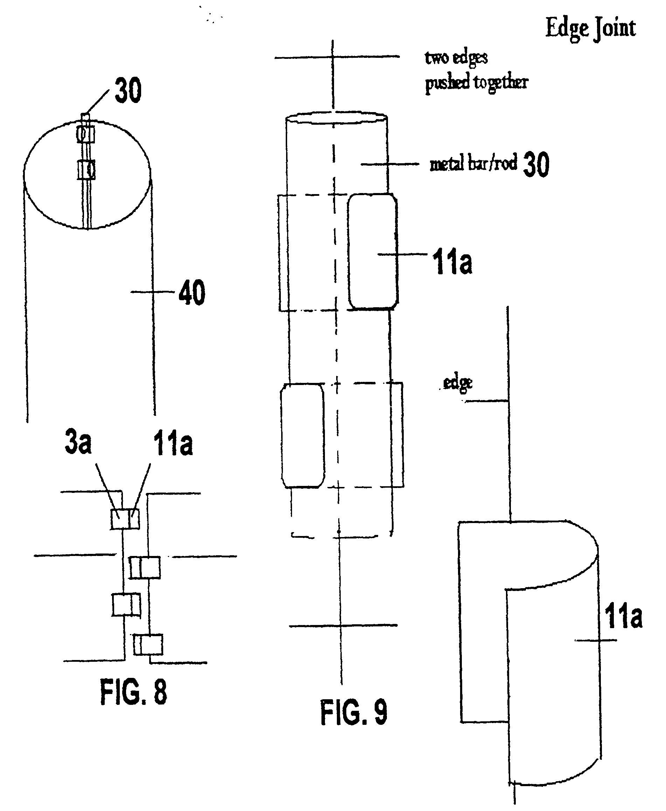

**Figure 8** shows the invention applied to the construction of a cylindrical sleeve 40. In this embodiment a single panel or sheet is bent right round to form the cylinder, the opposite edges meeting along what become an edge parallel to the cylinder axis. The joint device represents a slight variation from those previously illustrated in that the brackets 3a have bent-over flanges 11a only at their free ends, i.e. those overlying the opposite panel. These brackets are shown on a larger scale in **Figure 9,** which also shows the bar 30 driven between the sets of ends 11a.

The invention is generally useful for forming a tube for reinforcement or other purposes around "legs", i.e. posts, masts and other elongate objects where access to the ends is impossible, for instance because the lower end is embedded in the ground and the upper supports an immovable object. In the case of a lamp post the object (the lamp) is "immovable" because of the expense of disconnecting it, while in the case of an oil platform it is of course the sheer bulk of the platform that prevents access. The invention could also be used for flat (e.g. wall) panels, or even on the outside of a cylinder e.g. for making or lining a shaft.

A further advantage is that the parts can all be treated in the factory, e.g. galvanised, before being brought on site. Since at least the outside does not get scratched by bolts etc. during application the outer surface remains resistant to corrosion. The inner surfaces are generally protected by being encased in concrete.

## Claims

1. An arrangement for joining two panel edges (1, 2), including the edges, two series of brackets (3) each fixed to a different one of the edges, the bracketsef each series protruding beyond the edge which is to be joined, each bracket having a main body generally parallel locally to the plane of its panel and having an upstanding flange on its protruding facing away from the plane of the panel, the brackets being arranged so that when the two edges are pushed together the two series of brackets on the two panel edges interleave, the bracketsef each series overlapping the other respective panel, and the panel edges abut.

2. An arrangement according to claim 1 further including a fixing means such as a rigid bar (30) to be placed between the upstanding flanges of the free ends.

3. An arrangement according to claim 1 or 2, in which the panel edges belong to a single panel curved round to form a cylinder, or to two or more panels bent partly round so that in combination they form a cylinder.

4. An arrangement according to any preceding claim, in which the brackets are generally rectangular in outline, seen looking on to the plane of the panel.

5. An arrangement according to any preceding claim, in which the brackets are fixed to the panel edge, for example by welding, in such a way that their main bodies lie in a plane adjacent and parallel to that of the corresponding panel.

6. A post or structural support having one or more cylindrical panels fitted round it, joined by a joining arrangement according to any preceding claim.

7. A wall made of panels joined by an arrangement according to any of claims 1 to 5.

8. A panel assembly including panels joined at one or more edges thereof by arrangements according to any of claims 1 to 5, in which a setting substance (22) fills the space between the upstanding flanges of the free ends of the brackets.

9. A method of joining two panel edges, including the steps of providing each edge with a set of brackets protruding beyond the edge, each bracket having an upstanding flange on the protruding end, generally parallel to the edge and facing away from the plane of the panel; causing the two edges to abut in such a way that the brackets are interleaved and their protruding ends respectively overlap and lie on the other panel; and retaining the brackets in place by inserting a solid or setting material or bar between the respective sets of flanges.

10. A method of repairing or reinforcing a post by applying a split sleeve round it, in which the edges of the split are joined by a method according to claim 9.

## Patentansprüche

1. Anordnung zum Verbinden zweier Plattenkanten (1, 2), umfassend die Kanten, zwei Reihen an Bügeln (3), von denen jeder an einer anderen der Kanten befestigt ist, wobei die Bügel jeder Reihe über die Kante, welche zu verbinden ist, hinaus vorstehen, wobei jeder Bügel einen Hauptkörper aufweist, der im Wesentlichen parallel lokal zur Ebene seiner Platte ist, sowie einen nach oben stehenden Flansch auf seinem vorstehenden Ende, welcher von der Ebene der Platte weg gerichtet ist, wobei die Bügel so angeordnet sind, dass, wenn die beiden Kanten zusammengedrückt werden, die beiden Reihen an Bügeln auf den beiden Plattenkanten ineinander greifen, wobei die Bügel jeder Reihe die jeweilige andere Platte überlappen, und dass die Plattenkanten aneinander stoßen.

2. Anordnung nach Anspruch 1, weiter aufweisend ein Befestigungsmittel, wie bspw. einen starren Stab (30), das zwischen den aufstehenden Flanschen der freien Enden anzuordnen ist.

3. Anordnung nach Anspruch 1 oder 2, wobei die Plattenkanten zu einer einzelnen Platte gehören, welche gekrümmt ist, um einen Zylinder auszubilden, oder bei der zwei oder mehrere Platten teilweise rund gebogen sind, so dass sie in Kombination einen Zylinder ausbilden.

4. Anordnung nach einem der vorstehenden Ansprüche, wobei die Bügel im Wesentlichen einen rechteckigen Umriss aufweisen, wenn man auf die Ebene der Platte sieht.

5. Anordnung nach einem der vorstehenden Ansprüche, wobei die Bügel so an der Plattenkante befestigt sind, bspw. durch Schweißen, dass ihre Hauptkörper in einer Ebene benachbart und parallel derjenigen der entsprechenden Platte liegen.

6. Pfosten oder Strukturstütze, welche eine oder mehrere zylindrische Platten aufweist, die um sie herum angeordnet sind und durch eine Verbindungsanordnung gemäß einem der vorstehenden Ansprüche verbunden sind.

7. Wand aus Platten, welche durch eine Anordnung nach einem der Ansprüche 1 bis 5 verbunden sind.

8. Plattenanordnung, welche Platten aufweist, die an einer oder mehreren Kanten derselben durch Anordnungen nach einem der Ansprüche 1 bis 5 verbunden sind, wobei eine Haftsubstanz (22) den Zwischenraum zwischen den aufstehenden Flanschen der freien Enden der Bügel füllt.

9. Verfahren zum Verbinden zweier Plattenkanten, umfassend die Schritte des Ausstattens jeder Kante mit einem Satz an Bügeln, welche über die Kante hinaus vorstehen, wobei jeder Bügel einen nach oben stehenden Flansch auf dem vorstehenden Ende aufweist, welcher im Wesentlichen parallel zur Kante ist und von der Ebene der Platte weg gerichtet ist; Stoßen der beiden Kanten so aneinander, dass die Bügel ineinander greifen und sich ihre vorstehenden Enden jeweils überlappen und auf der anderen Platte liegen; und Halten der Bügel am Platz, indem ein festes oder aushärtendes Material oder ein Stab zwischen die jeweiligen Sätze von Flanschen geschoben werden.

10. Verfahren zum Reparieren oder Verstärken eines Pfostens durch Anlegen einer mit Schlitz versehenen Muffe um ihn herum, wobei die Kanten des Schlitzes durch ein Verfahren nach Anspruch 9 verbunden sind.

## Revendications

1. Dispositif pour joindre deux bords (1, 2), de panneaux comprenant les bords, deux séries de pattes (3) fixées chacune à l'un, différent, des bords, les pattes de chaque série dépassant au-delà du bord qui doit être joint, chaque patte ayant un corps principal globalement parallèle localement au plan de son panneau et ayant un rebord remontant sur son extrémité dépassante, s'éloignant du plan du panneau, les pattes étant agencées de façon que, lorsque les deux bords sont poussés l'un contre l'autre, les deux séries de pattes sur les deux bords des panneaux s'imbriquent entre elles, les pattes de chaque série chevauchant l'autre panneau respectif, et les bords des panneaux étant en appui.

2. Dispositif selon la revendication 1, comprenant en outre un moyen de fixation tel qu'une barre rigide (30) destinée à être placée entre les rebords remontant des extrémités libres.

3. Dispositif selon la revendication 1 ou 2, dans lequel les bords des panneaux appartiennent à un seul panneau cintré pour former un cylindre, ou à deux ou plus de deux panneaux courbés partiellement en rond afin de former ensemble un cylindre.

4. Dispositif selon l'une quelconque des revendications précédentes, dans lequel les pattes sont d'un contour globalement rectangulaire, en regardant sur le plan du panneau.

5. Dispositif selon l'une quelconque des revendications précédentes, dans lequel les pattes sont fixées au bord du panneau, par exemple par soudage, d'une manière telle que leurs corps principaux s'étendent dans un plan adjacent et parallèle à celui du panneau correspondant.

6. Colonne ou support structural autour duquel sont ajustés un ou plusieurs panneaux cylindriques, joints par un dispositif de jonction selon l'une quelconque des revendications précédentes.

7. Paroi formée de panneaux joints par un dispositif selon l'une quelconque des revendications 1 à 5.

8. Assemblage de panneaux comprenant des panneaux joints à un ou plusieurs de leurs bords par des dispositifs selon l'une quelconque des revendications 1 à 5, dans lequel une substance de montage (22) remplit l'espace entre les rebords remontants des extrémités libres des pattes.

9. Procédé pour joindre deux bords de panneau comprenant, les étapes qui consistent à pourvoir chaque bord d'un jeu de pattes dépassant au-delà du bord, chaque patte ayant un rebord remontant sur l'extrémité dépassante, globalement parallèle au bord et tourné à l'écart du plan du panneau ; le fait d'amener les deux bords en appui d'une manière telle que les pattes s'imbriquent entre elles et que leurs extrémités dépassantes chevauchent respectivement l'autre panneau et s'étendent sur celui-ci ; et la retenue des pattes en place en introduisant une matière solide ou de fixation ou une barre entre les jeux respectifs de rebord.

10. Procédé de réparation ou de renforcement d'une colonne par l'application d'un manchon fendu autour de celle-ci , dans lequel les bords de la fente sont joints par un procédé selon la revendication 9.
